# EUROPEAN PATENT APPLICATION

(11) **EP 4 726 817 A2**
(43) Date of publication of application: **15.04.2026**
(21) Application number: 25200985.7
(22) Date of filing: 09.09.2025
(51) Int. Cl.: H01M 8/026, H01M 8/0263, C25B 9/65, C25B 13/02

(54) **SEPARATOR, AND ELECTROCHEMICAL CELL**

(30) Priority: 19.09.2024 JP 2024162496
(71) Applicant: KABUSHIKI KAISHA TOSHIBA, Kawasaki-shi, Kanagawa, 212-0013 (JP)
(72) Inventor: HONGO, Takuya, Kawasaki-shi, Kanagawa (JP); HIRAOKA, Toshiro, Kawasaki-shi, Kanagawa (JP); HOSONO, Yasuharu, Kawasaki-shi, Kanagawa (JP); KITAGAWA, Ryota, Kawasaki-shi, Kanagawa (JP); KOFUJI, Yusuke, Kawasaki-shi, Kanagawa (JP); YONETSU, Maki, Kawasaki-shi, Kanagawa (JP); MIKOSHIBA, Satoshi, Kawasaki-shi, Kanagawa (JP)
(74) Representative: Hoffmann Eitle

(57) **Abstract**

A separator according to an embodiment includes a flow channel comprising one or more flow-channel grooves provided between flow-channel walls. One or more protrusions are provided on the flow-channel walls.

## Description

### FIELD

Embodiments described herein relate generally to a separator, an electrochemical cell, a stack and an apparatus.

### BACKGROUND

In recent years, there has been growing anticipation for renewable energy. Examples of renewable energy include solar power generation, hydroelectric power generation, wind power generation, and geothermal power generation.

In addition, fuel cell power generation and electrolysis for energy conversion are focused for decarbonization.

### BRIEF DESCRIPTION OF THE DRAWINGS

FIG. 1 is a schematic diagram of a separator according to an embodiment;
FIG. 2 is a schematic cross-sectional diagram of a separator according to an embodiment;
FIG. 3 is a schematic diagram of a separator according to an embodiment;
FIG. 4 is a schematic diagram of a separator according to an embodiment;
FIG. 5 is a schematic diagram of a separator according to an embodiment;
FIG. 6 is a schematic diagram of a separator according to an embodiment;
FIG. 7 is a schematic diagram of a separator according to an embodiment;
FIG. 8 is a schematic diagram of a separator according to an embodiment;
FIG. 9 is a schematic diagram of a separator according to an embodiment;
FIG. 10 is a schematic diagram of a separator according to an embodiment;
FIG. 11 is a schematic diagram of a separator according to an embodiment;
FIG. 12 is a schematic diagram of an electrochemical cell according to an embodiment;
FIG. 13 is a schematic diagram of an electrochemical cell according to an embodiment;
FIG. 14 is a schematic diagram of an electrochemical cell according to an embodiment;
FIG. 15 is a schematic diagram of an electrochemical cell according to an embodiment;
FIG. 16 is a perspective schematic diagram of an electrochemical cell according to an embodiment;
FIG. 17 is a schematic diagram of an electrochemical cell according to an embodiment;
FIG. 18 is a schematic diagram of an electrochemical cell according to an embodiment;
FIG. 19 is a schematic diagram of a stack according to an embodiment;
FIG. 20 is a schematic diagram of an apparatus according to an embodiment; and
FIG. 21 is a schematic diagram of an apparatus according to an embodiment.

### DETAILED DESCRIPTION

A separator according to an embodiment includes a flow channel comprising one or more flow-channel grooves provided between flow-channel walls. One or more protrusions are provided on the flow-channel walls.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials contained in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

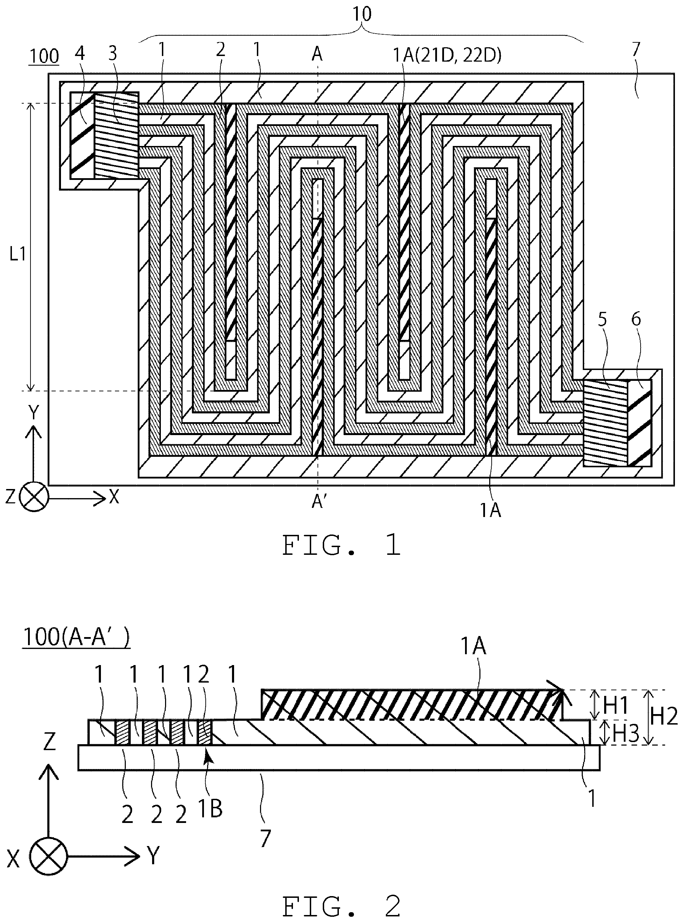

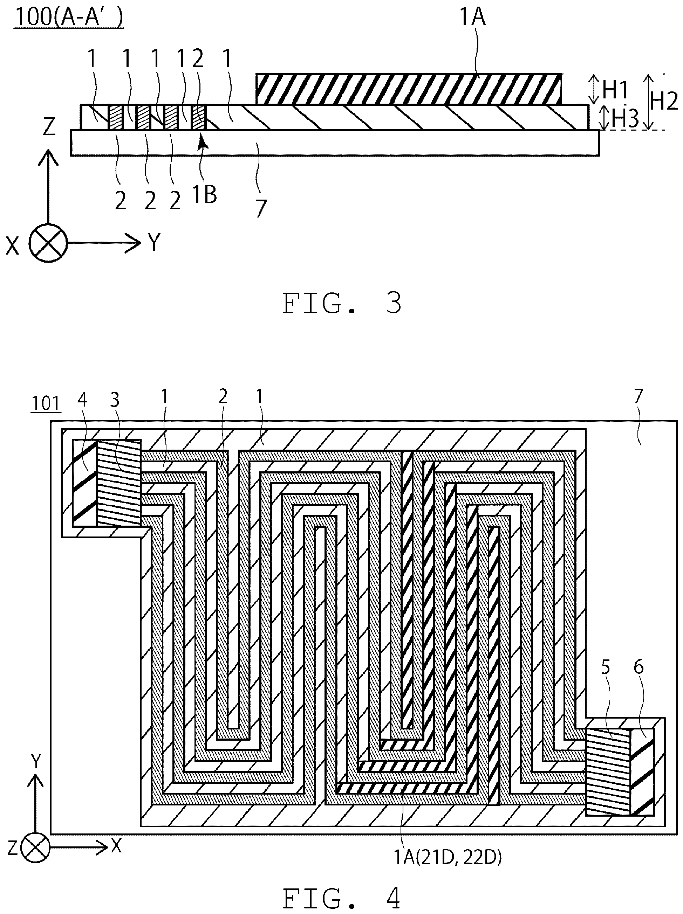

The first embodiment relates to a separator 100. FIG. 1 shows a schematic diagram of the separator 100 according to this embodiment. FIGS. 2 and 3 show schematic cross-sectional diagrams along line A-A' in FIG. 1. The separator 100 includes a flow channel 10, a supply manifold 4, an exhaust manifold 6, a supply connection channel 3, and an exhaust connection channel 5. The flow channel 10, the supply manifold 4, the discharge manifold 6, the supply connection channel 3, and the discharge connecting channel 5 are provided on a frame 7 of the separator 100. The directions in FIG. are represented by X, Y, and Z.

The separator 100 according to the first embodiment can be used, for example, in electrochemical cells such as fuel cells or electrolytic device. The separator 100 supplies a fluid used for electrode reactions and discharges a fluid containing products of the electrode reactions. The fluids are gas and/or liquid. When the fluid discharged from the exhaust manifold 6 includes both gas and liquid, the pressure loss of the separator 100 can be effectively suppressed.

The separator 100 includes a flow channel 10 comprising flow-channel walls 1 and flow-channel grooves 2 provided between the flow-channel walls 1. The flow-channel wall 1 may surround the supply manifold 4, the exhaust manifold 6, the supply connection channel 3, and the exhaust connection channel 5.

The region sandwiched between the flow-channel walls 1 is the flow-channel groove 2. The flow-channel walls 1 may be, for example, higher level portions of metal members provided on the frame 7, or the flow-channel grooves 2 may be lower level portions provided on the metal members provided on the frame 7. Fluid flows through the flow channel 10. The flow channel 10 preferably has a plurality of flow-channel grooves 2, and it is preferable for the fluid to flow through a plurality of flow-channel grooves 2. In order for the fluid to flow across the entire porous layer of the electrode in direct contact with the separator 100 with little gaps, the flow channel 10 preferably has a serpentine flow channel shape, as shown in the schematic diagram of FIG. 1, for example.

The flow-channel walls 1 are composed of metal, for example.

One or more protrusions 1A have a height one or more times higher than other flow-channel walls (other portion(s) of the flow-channel walls without the protrusions 1A) 1. The one or more protrusions 1A are provided on a part of the flow-channel walls 1.

The frame 7 is preferably insulating and composed of a resin material, for example.

The pitch of the flow-channel grooves 2 is preferably 0.1 [mm] or more and 5 [mm] or less, more preferably 0.3 [mm] or more and 3 [mm] or less, and even more preferably 0.5 [mm] or more and 2.5 [mm] or less.

The supply connection channel 3 is provided between the supply manifold 4 and the flow channel 10. It is a flow channel that connects the supply manifold 4 and the flow channel 10. Fluid passing through the supply connection channel 3 flows through the flow channel 10. The supply connection channel 3 may be a concave-convex portion of the frame 7, or it may be composed of a separate member from the frame 7. Fluid also flows in the direction where the supply connection channel 3 and the supply manifold 4 are connected.

The supply manifold 4 is an opening of the separator 100. Fluid is supplied from the supply manifold 4. Other manifolds not shown in the figure may be provided on the separator 100.

The exhaust connection channel 5 is provided between the exhaust manifold 6 and the flow channel 10. It is a flow channel that connects the exhaust manifold 6 and the flow channel 10. Fluid passing through the flow channel 10 and then through the exhaust connection channel 5 is discharged from the exhaust manifold 6. The exhaust connection channel 5 may be a concave-convex portion of the frame 7, or it may be composed of a separate member from the frame 7.

The exhaust manifold 6 is an opening of the separator 100. Fluid is discharged from the exhaust manifold 6.

The protrusions 1A are members that increase the height of the flow-channel wall 1 (the protrusion member is distinct from the flow-channel wall 1) or portions that increases the height of the flow-channel wall 1 (the protrusion member is not distinct from the flow-channel wall 1). The protrusions 1A are provided in the height direction of the flow-channel wall 1. The protrusions 1A are provided in the height direction of the flow-channel wall 1 on the opposite side to the frame 7. The protrusions 1A, which are a member for increasing the height of the flow-channel wall 1, are composed of a material different from the flow-channel wall 1. The protrusions 1A, which are a portion for increasing the height of the flow-channel wall 1, are composed of the same material as the flow-channel wall 1.

The protrusions 1A, which are composed of a material different from the flow-channel wall 1, may include, for example, resin. The protrusions 1A, which are composed of a material different from the flow-channel wall 1, preferably include metal, resin, fiber-reinforced metal, or fiber-reinforced resin. For the flow-channel wall 1, aluminum, copper, or stainless steel is preferable. For the resin of the protrusions 1A, POM (polyoxymethylene), PPS (polyphenylene sulfide) or PEEK (polyetheretherketone) is preferable. As for the fiber-reinforced metal of the protrusions 1A, aluminum base material with alumina silica (Al₂O₃SiO₂) fibers as reinforcing fibers, boron fiber-reinforced aluminum, or silicon carbide fiber-reinforced aluminum are preferable. For the fiber-reinforced resin of the protrusions 1A, glass epoxy resin, glass fiber reinforced plastics other than glass epoxy resin, or carbon fiber reinforced plastic are preferable

The protrusions 1A are in direct contact with a porous support (e.g., gas diffusion layer) of the electrode in contact with the separator 100. Fluid flowing through the flow-channel grooves 2 of the flow channel 10 diffuses into the porous support from the flow-channel grooves 2 and is supplied to the entire porous support by getting over some parts of the flow-channel wall 1, after which it is discharged from the exhaust manifold 6. When a portion of the porous support in contact with the protrusions 1A is partly compressed, an area of the porous support with higher density and less fluid flow is formed. When an area where fluid flow is difficult to form is formed in the porous support because of the protrusions 1A, fluid passing through the porous support again flows into the flow channel 10. The fluid flows easily through the portions of the porous support where the flow is easier and tends to take the shortest route; for example, it may be difficult to supply fluid to the end of the porous support.

When the fluid flows through the flow channel 10 of the separator 100 with less bias (or uniformly), the fluid also tends to flow into the porous support with less bias. It is preferable to provide a protrusion 1A in the flow channel 10 along which fluid flow is facilitated so that part of the porous support becomes inaccessible to the fluid. By reducing the bias of the fluid flowing through the flow channel 10 of the separator 100, it is possible to suppress the accumulation of gas contained in the fluid.

When gas accumulates in the flow-channel grooves 2, a side reaction is likely to occur at the electrode in contact with the separator 100. When CO₂ is electrolyzed, oxygen gas generated at the cathode and concentrated on the anode exhaust side, and hydrogen gas generated by the reduction of water as a byproduct due to the decrease in CO₂ concentration on the cathode exhaust side react, producing hydrogen peroxide. Since hydrogen peroxide deteriorates the diaphragm, it is preferable to use the separator 100 of this embodiment in an electrochemical cell so that gas does not accumulate.

The protrusions 1A are preferably sandwiched between the flow-channel grooves 2.

Referring to FIG. 2 and FIG. 3, which are schematic cross-sectional diagrams of the separator 100, the separator 100 including the protrusions 1A will be described below.

As shown in the schematic diagram of FIG. 2, the separator 100 has the flow-channel walls 1 provided on the bottom surface 1B, and the protrusions 1A are located on an upper portion of the flow-channel walls 1. The bottom surface 1B is a surface at the bottom of the flow-channel groove 2. As shown in FIG. 2, a portion of the flow-channel wall 1 can be formed as the protrusions 1A.

As shown in the schematic diagram of FIG. 3, the separator 100 has the flow-channel walls 1 provided on the bottom surface 1B, and the protrusions 1A are provided on the flow-channel walls 1. As shown in FIG. 3, a portion of the flow-channel wall 1 can be formed as the protrusions 1A.

The bottom surface 1B is a surface of a member constituting a surface of the flow-channel groove 2 of the flow channel 10. The bottom surface 1B may be a surface of the frame 7, or it may be a surface of a member different from the frame 7. For example, the bottom surface 1B can be made of a metal including an alloy and can be electrically connected to a current collector not shown in the figure.

The height H1 of the protrusions 1A is the height of the portion protruding from the flow-channel wall 1 with a reference height. The height H1 of the protrusions 1A is the distance obtained by subtracting the height H3 of the flow-channel wall 1 from the height H2, which is the distance from the bottom surface 1B to the surface on the side opposite the frame 7 of the protrusions 1A. The reference height of the flow-channel wall 1 is the height H3 of the flow-channel wall 1 without the protrusions 1A.

The height H1 of the protrusions 1A is preferably 10 [µm] or more and 500 [µm] or less, more preferably 20 [µm] or more and 250 [µm] or less, and even more preferably 30 [µm] or more and 120 [µm] or less.

From the viewpoint of partially blocking the flow of fluid in the porous support, the one or more protrusions 1A are provided on the flow-channel wall 1 in the straight area, and the one or more protrusions 1A with the total length of the protrusions 1A on the straight area where the protrusions 1A are present which is preferably 50% (and 100% or less) or more of the length L1 of that straight area (excluding turnaround areas) of the flow-channel grooves 2, more preferably 70% (and 100% or less) or more of the length L1, and even more preferably 90% (and 100% or less) or more of the length L1, is preferably included. The straight area of the flow-channel grooves 2 may include a curved portion that does not turnaround.

From the viewpoint of partially blocking the flow of fluid in the porous support, two or more of the flow-channel walls 1 in which the one or more protrusion 1A are provided on the straight area of the flow-channel walls 1, are preferably included in the flow channel 10. The total length of the protrusions 1A on each straight area where the protrusions 1A are present is preferably 50% or more (and 100% or less) of the length L1 of that straight area (excluding turnaround areas) of the flow-channel grooves 2, more preferably 70% or more (and 100% or less) of the length L1, and even more preferably 90% or more (and 100% or less) of the length L1, is preferably included. The straight area of the flow-channel grooves 2 may include a curved portion that does not turnaround.

From the viewpoint of partially blocking, not completely blocking, the flow of fluid in the porous support, the area where the one or more protrusions 1A are provided, is preferably 50% or more and 100% or less of the surface area of the flow-channel wall 1 sandwiched between the flow-channel grooves 2 (excluding side surfaces), more preferably 70% or more and 100% or less, and even more preferably 90% or more and 100% or less.

Longitudinal elastic modulus (elastic modulus in the height direction) of the protrusions 1A is preferably 2.5 [GPa] or more. The longitudinal elastic modulus can be determined by, for example, the resonance method. It is preferable that the longitudinal elastic modulus of the protrusions 1A is 2.5 [GPa] or more, more preferably 5 [GPa] or more, and even more preferably 50 [GPa] or more.

The separator 100 will be further described below with examples of the protrusions 1A.

FIG. 4 is a schematic diagram illustrating a separator 101. The Separator 101 shown in FIG. 4 is a variation example of the separator 100. The protrusions 1A of Separator 101 are also provided at the turnaround area of the flow channel 10.

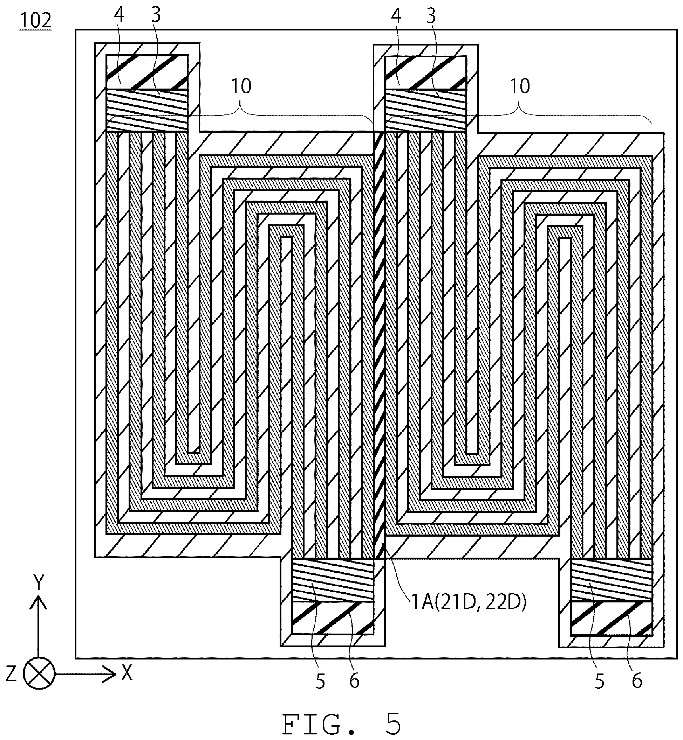

FIG. 5 shows a schematic diagram of a separator 102. The separator 102 shown in FIG. 5 is a variation example of the separator 100. The separator 102 has two flow channels 10, and the protrusions 1A provided between the two flow channels 10 divide the two flow channels 10. When the separator 102 is large, dividing the flow channel 10 into multiple channels can reduce pressure loss between the supply side and the exhaust side of the flow channel 10. The protrusions 1A are sandwiched between the flow-channel grooves 2 where fluid flows in the same direction.

As shown in FIG. 5, a separator 102 has two systems of flow channels arranged horizontally in the drawing. The two systems of the flow channels are designed to have fluid flowing in the same direction, with the supply manifold 4 provided on the upper side of the drawing and the exhaust manifold 6 provided on the lower side of the drawing. When the flow channel is divided into two systems as shown in FIG. 5, the pressure difference at the boundary portion of the two flow channels 10 is large, making it easy for fluid to flow into other system's flow channels. By providing the protrusions 1A at the boundary portion of the two flow channels 10, mixing of fluid between systems can be reduced.

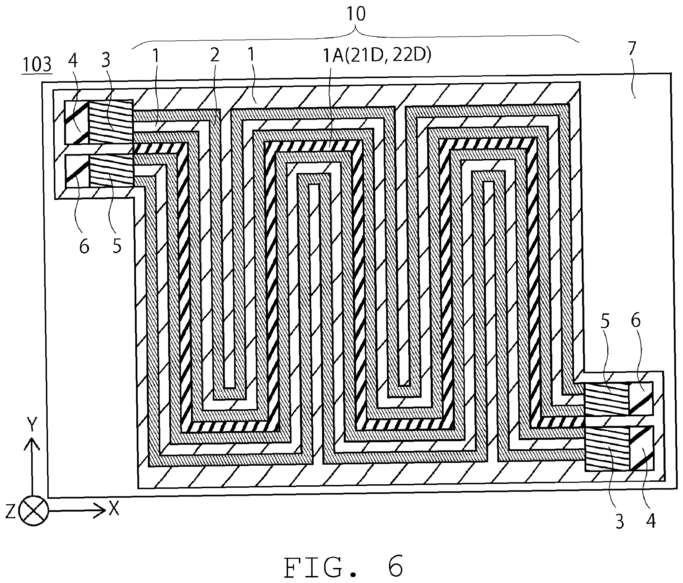

FIG. 6 shows a schematic diagram of separator 103. The separator 103 shown in FIG. 6 is a variation example of separator 100. The separator 103 has two flow channels 10, and the protrusions 1A provided between the two flow channels divides the two flow channels 10. When the separator 102 is large, dividing the flow channel 10 into multiple channels can reduce pressure loss between the supply side and the exhaust side of the flow channel 10. The protrusions 1A are sandwiched between the flow-channel grooves 2 where fluid flows in opposite directions.

As shown in FIG. 6, a separator 103 has two systems of flow channels arranged vertically. The two systems of flow channels are designed to have fluid flowing in opposite directions: the upper system has the supply manifold 4 on the left side and the exhaust manifold 6 on the right side, while the lower system has the exhaust manifold 6 on the left side and the supply manifold 4 on the right side. When the flow channel is divided into two systems as shown in FIG. 6, the pressure difference at the boundary portion of the two flow channels 10 is large, making it easy for fluid to flow into other system's flow channels. By providing the protrusions 1A at the boundary portion of the two flow channels 10, mixing of fluid between systems can be reduced allowing fluid to be supplied and exhausted throughout the porous support.

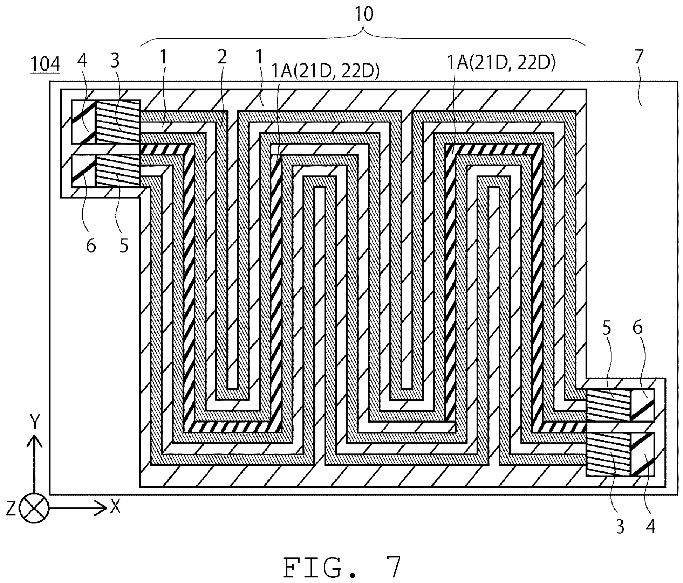

FIG. 7 shows a schematic diagram of a separator 104. The separator 104 shown in FIG. 7 is a variation example of the separator 103. The protrusions 1A are provided near the supply manifold 4 and the exhaust manifold 6 where the pressure difference is large, and the protrusions 1A are not provided near the middle of the flow channel 10 where the pressure difference is small.

By providing the protrusions 1A near the supply manifold 4 and exhaust manifold 6 where the pressure difference is large, mixing of fluid between systems can be reduced, allowing fluid to be supplied and exhausted throughout the porous support.

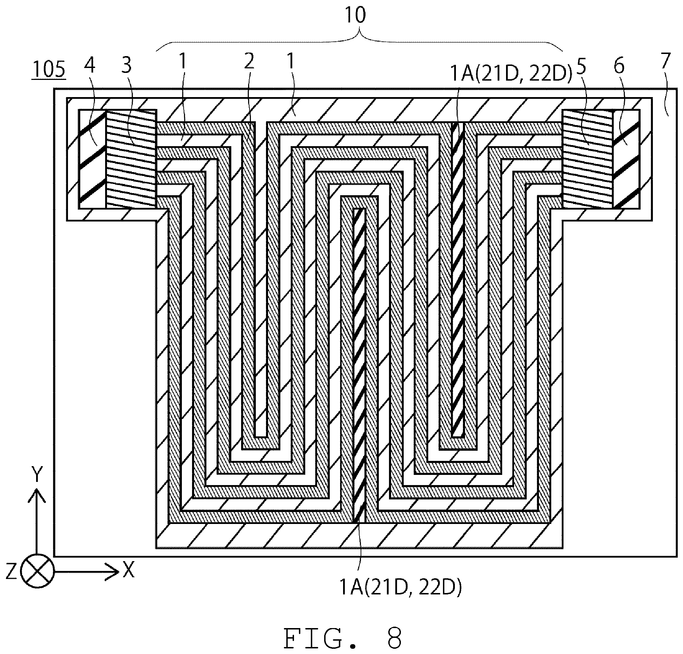

FIG. 8 shows a schematic diagram of a separator 105. The Separator 105 shown in FIG. 8 is a variation example of the separator 100. While the separator 100 has an even number of turnaround areas, the separator 105 has an odd number of turnaround areas. The protrusions 1A are sandwiched between the flow-channel grooves 2 where fluid flows in the same direction.

As shown in FIG. 8, a separator 105 has the protrusions 1A provided in the latter half of the flow channel 10 (the latter half of the flow channel 10 is from the midpoint (determined by the number of turnaround areas occurring, the separator 105 shown in FIG. 8 has 5 portions where the flow channel turnarounds at approximately 90° or 180°) to the end of the channel, which is susceptible to uneven fluid flow. The protrusions 1A are preferably provided beside the flow-channel grooves 2 on the flow channel at the [half the number of the turnaround area]th turnaround area or later from the supply manifold 4. When the number of the turnaround area is 5, the protrusions 1A are provided beside the flow-channel grooves 2 between the 3rd turnaround area to the end of the flow channel on the exhaust manifold 6 side. By providing the protrusions 1A in the latter half of the flow channel 10, fluid can be supplied and exhausted throughout the porous support.

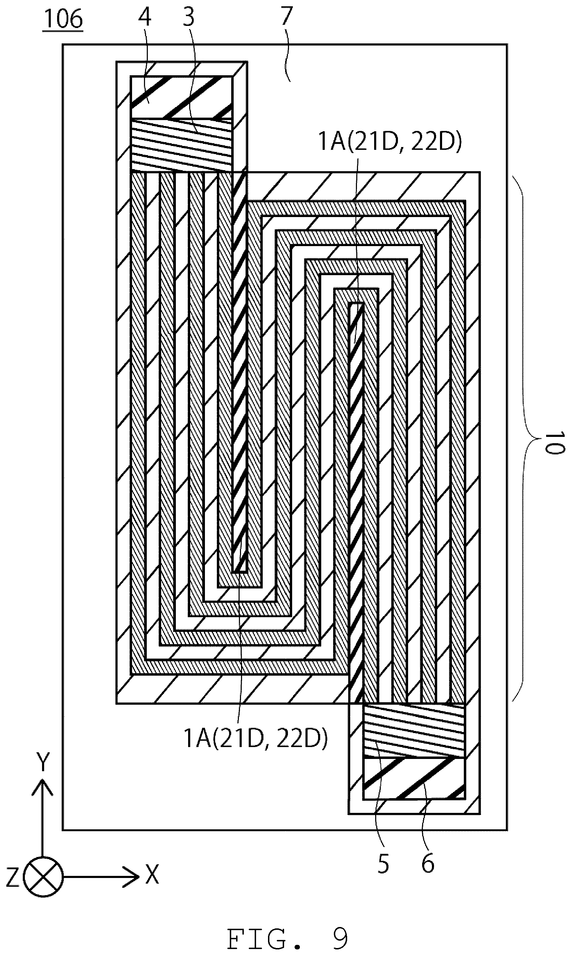

FIG. 9 shows a schematic diagram of a separator 106. The separator 106 shown in FIG. 9 is a variation example of the separator 101. The separator 106 has one system flow channel 10. The protrusions 1A are also useful for the separator 106, which has a short flow channel 10.

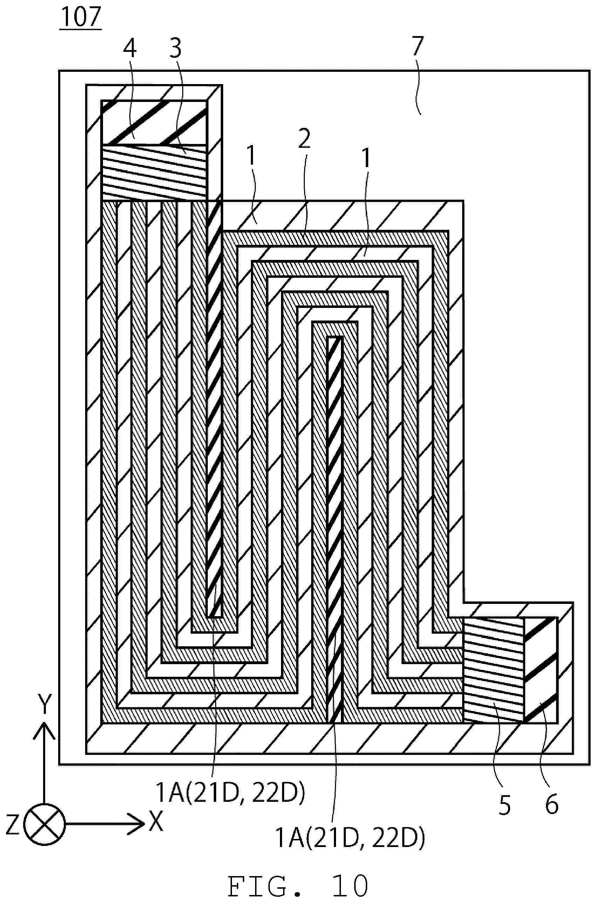

FIG. 10 shows a schematic diagram of a separator 107. The separator 107 shown in FIG. 10 is a variation example of the separator 106. The supply connection channel 3 and the supply manifold 4, and the exhaust connection channel 5 and the exhaust manifold 6 are asymmetrically arranged in separator 107. Even the separator 107, which has a short flow channel 10 and asymmetrically arranged supply connection channel 3 and supply manifold 4, and exhaust connection channel 5 and exhaust manifold 6, can utilize the protrusions 1A.

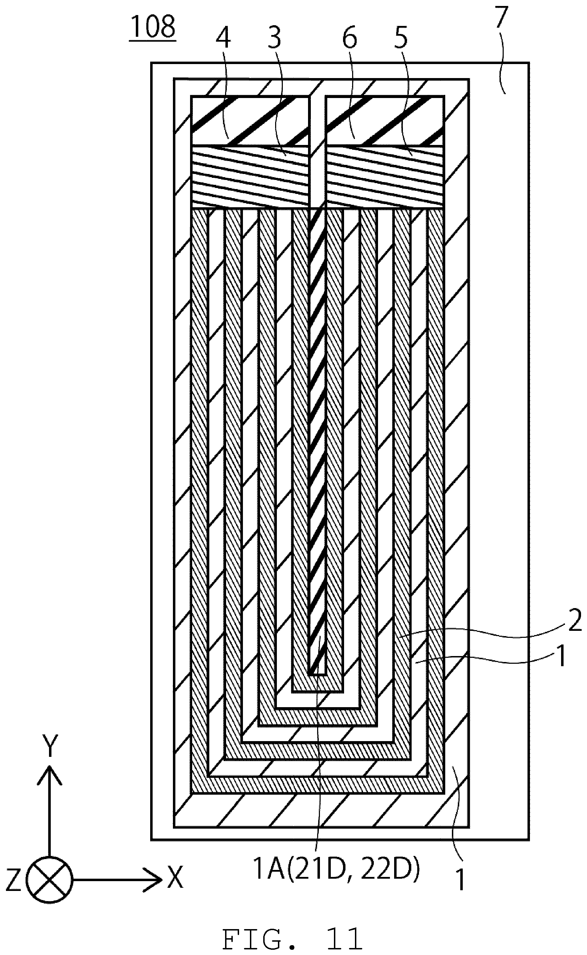

FIG. 11 shows a schematic diagram of a separator 108. The separator 108 shown in FIG. 11 is a variation example of separator 106. The separator 108 has one turnaround area in the flow channel 10. The protrusions 1A are useful for a separator that has a simple flow channel10 with one turnaround part.

### (SECOND EMBODIMENT)

A second embodiment relates to an electrochemical cell. FIGS. 11-13 are schematic diagrams illustrating the electrochemical cell 200 of the second embodiment. The electrochemical cell 200 is used for electrolysis or as a fuel cell.

The electrochemical cell 200 comprises an anode 21, a cathode 22, a diaphragm (electrolyte membrane) 23, a first separator 24 and a second separator 25.

The anode 21 has a porous support 21A on the side of the first separator 24 and a catalyst layer 21B on the side of the diaphragm 23. The first separator 25 is provided on the anode on a side opposite to the diaphragm 23. Suitable materials for the porous support 21A and catalyst layer 21B of the anode 21 are chosen according to the reaction at the anode.

The cathode 22 has a porous support 22A on the side of the second separator 25 and a catalyst layer 22B on the side of the diaphragm 23. The second separator 25 is provided on the cathode 22 on a side opposite to the diaphragm 23. Suitable materials for the porous support 22A and catalyst layer 22B of the cathode 22 are chosen according to the reaction at the cathode.

The diaphragm 23 is positioned between the anode 21 and the cathode 22. For example, it may include a cation exchange membrane, an anion exchange membrane, or a neutral membrane.

Suitable materials for the diaphragm 23 include one or more selected from a group consisting of sulfonic acid groups, sulfonimide groups, and sulfuric acid groups, such as a fluorinated polymer or an aromatic hydrocarbon polymer, or organic polymeric material. For example, a fluorinated polymer containing sulfonic acid groups is preferable. Examples of fluorinated polymers containing sulfonic acid groups include Nafion (trademark, DuPont), Flemion (trademark, Asahi Kasei Corporation), Celemeix (trademark, Asahi Kasei Corporation), Aquivion (trademark; Solvay Specialty Polymers) or Aciplex (trademark, AGC). Alternatively, various conductive membranes such as anion exchange membranes and porous membranes can be used in place of the proton-conductive membrane.

Examples of organic polymeric materials include poly ether, polysulfone, polyethylene, polypropylene, polyether sulfone, cellulose, and the like.

A porous membrane made of an organic polymer material used for the diaphragm 23 can be manufactured as follows. There are various manufacturing methods for the porous membrane of the organic polymer material, such as phase separation method, melt quenching method, extraction method, chemical treatment method, stretching method, irradiation etching method, melting method, foaming method, double layer method and hollow fiber formation method. The manufacturing method is not particularly limited. Among them, a non-solvent induced phase separation (NIPS) method involves contacting a uniform casting solution of an organic polymer dissolved in a solvent with a coagulant containing a non-solvent to create a concentration gradient between the solvent in the casting solution and the non-solvent in the coagulation bath. This drives the replacement of the solvent in the casting solution by the non-solvent, resulting in phase separation. Otherwise, a manufacturing method utilizing thermal-induced phase separation phenomenon that induces phase separation by cooling a polymer solution dissolved at high temperature is used. For materials like fluorinated resins, which are easy to fiberize, a method of applying shear force to create micro-pores within the membrane can be selected. Furthermore, combining these methods allows for obtaining a predetermined porous structure. The membrane can also be complexed with inorganic materials, or coated to control hydrophilicity on its surface. Layering multiple membranes is also acceptable.

The first separator 24 is used to supply the fluid used for the reaction at the anode 21 and discharge the fluid containing the reactants. The first separator 24 is electrically connected to the anode 21. It is preferable that the separator 100 according to the first embodiment be used as the first separator 24.

The second separator 25 is used to supply the fluid used for the reaction at the cathode 22 and discharge the fluid containing the reactants. The second separator 25 is electrically connected to the cathode 22. It is preferable that the separator 100 according to the first embodiment be used as the second separator 25.

It is preferable to use the separator 100 according to the first embodiment for either the first separator 24 and/or the second separator 25. Either the first separator 24 or the second separator 25 may be a separator having flow-channel grooves 2 sandwiched between flow-channel walls 1 without the protrusions 1A.

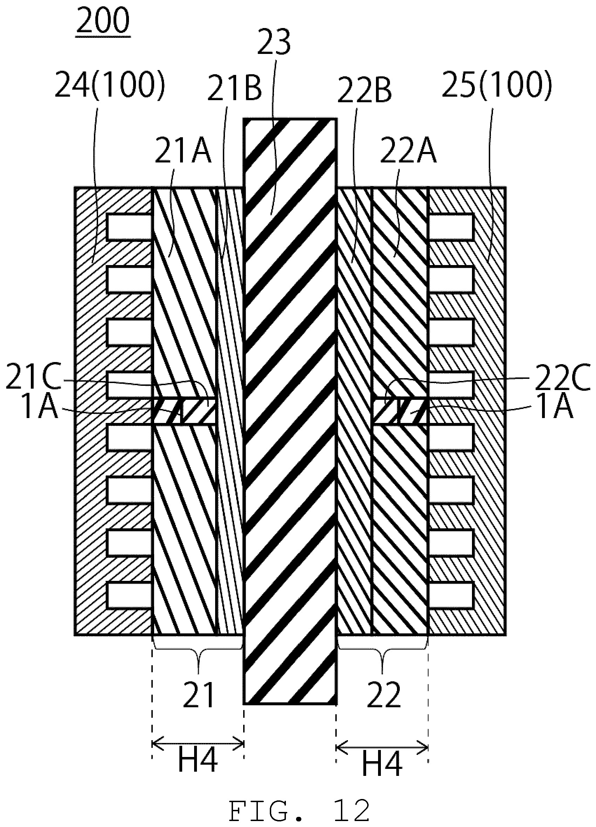

In FIG. 12, the electrochemical cell 200 uses the separator 100 according to the first embodiment for both the first separator 24 and the second separator 25.

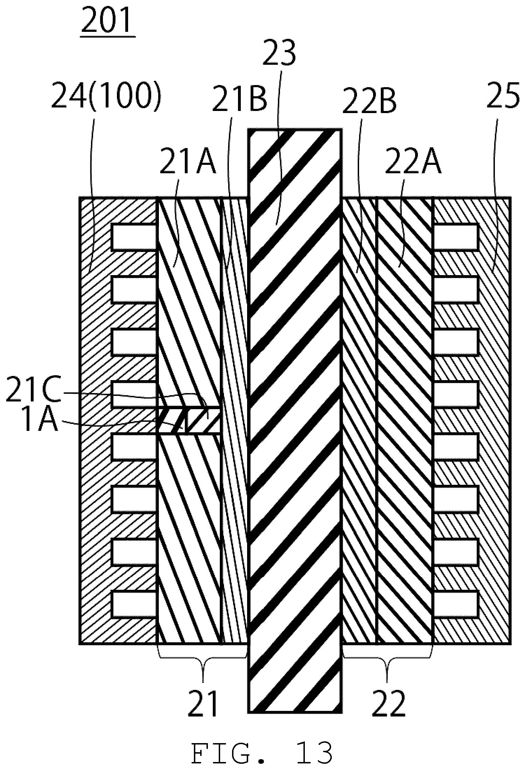

In FIG. 13, the electrochemical cell 200 uses the separator 100 according to the first embodiment for the first separator 24.

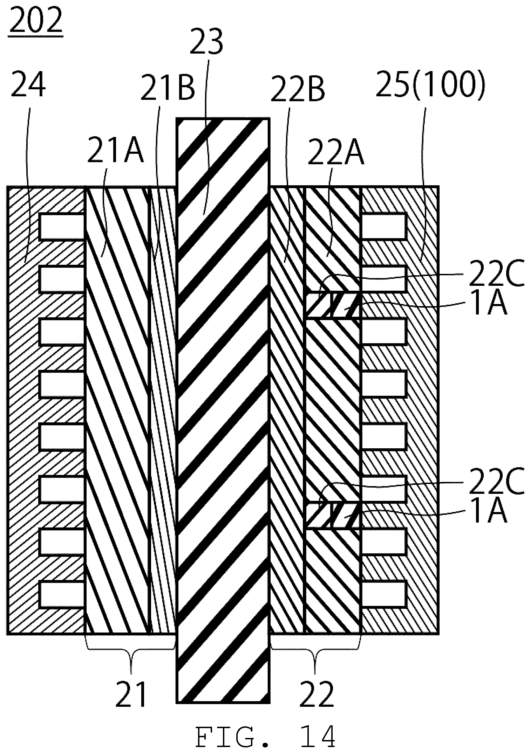

In FIG. 14, the electrochemical cell 200 uses the separator 100 according to the first embodiment for the second separator 25.

By using the separator 100 according to the first embodiment on the anode 21 side, the porous support 21A is crushed by the protrusions 1A and a low porosity region 21C is formed in the porous support 21A. The protrusions 1A and the low porosity region 21C make it harder for the fluid to flow, ensuring that the fluid is supplied and discharged with less unevenness across the entire porous support 21A.

The porosity of the low porosity region 21C is preferably 50 [vol%] or more and 99 [vol%] or less of the average porosity of the porous support 21A, more preferably 70 [vol%] or more and 99 [vol%] or less, and even more preferably 85 [vol%] or more and 99 [vol%] or less.

By using the separator 100 according to the first embodiment on the cathode 22 side, the porous support 22A is crushed by the protrusions 1A and a low porosity region 22C is formed in the porous support 22A. The protrusions 1A and the low porosity region 22C make it harder for the fluid to flow, ensuring that the fluid is supplied and discharged with less unevenness across the entire porous support 22A.

The porosity of the low porosity region 22C is preferably 50% or more and 99% or less of the average porosity of the porous support 22A, more preferably 70% or more and 99% or less, and even more preferably 85% or more and 99% or less.

The thickness H4 of the porous supports 21A, 22A is preferably 100 [µm] or more and 1500 [µm] or less, more preferably 120 [µm] or more and 1000 [µm] or less, and even more preferably 150 [µm] or more and 300 µm or less.

From the viewpoint of supplying and discharging fluid with less unevenness across the entire porous support 21A, the height H1 of the protrusions 1A is preferably 0.05 times or more and 0.5 times or less of the thickness H4 of the porous support 21A to which the first separator 24 provided with the protrusions 1A (directly) contacts, more preferably 0.1 times or more and 0.4 times or less, and even more preferably 0.15 times or more and 0.35 times or less.

From the viewpoint of supplying and discharging fluid with less unevenness across the entire porous support 22A, the height H1 of the protrusions 1A is preferably 0.05 times or more and 0.5 times or less of the thickness H4 of the porous support 22A to which the second separator 25 with the protrusions 1A (directly) contacts, more preferably 0.1 times or more and 0.4 times or less, and even more preferably 0.15 times or more and 0.35 times or less.

By using the separator 100 according to the first embodiment or second embodiment, the fluid used for the reaction is supplied and discharged with less unevenness across the entire substrate, thereby improving the reaction efficiency at the anode 21 and/or the cathode 22.

### (THIRD EMBODIMENT)

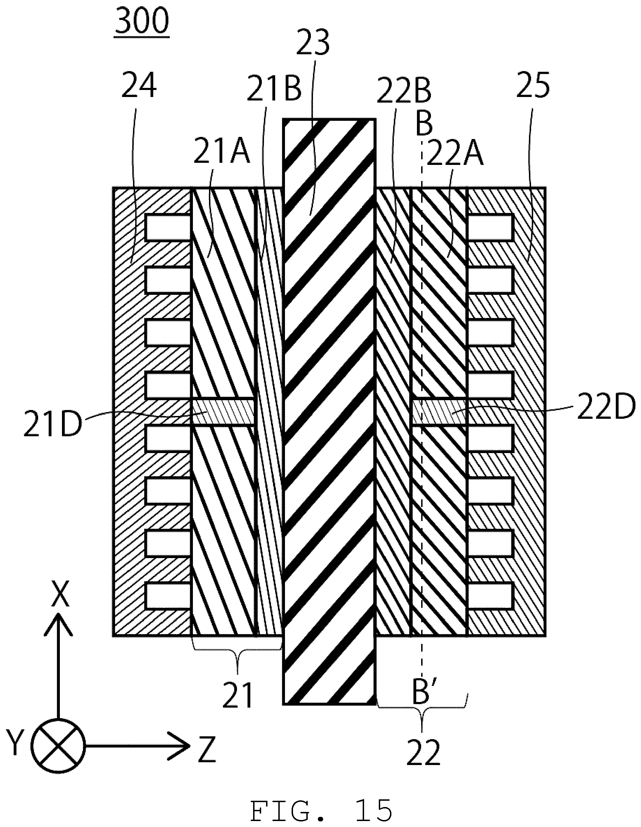

This embodiment relates to an electrochemical cell. FIG. 15 is a schematic diagram illustrating an electrochemical cell 300 of the third embodiment. The electrochemical cell 300 is used for electrolysis or as a fuel cell.

The electrochemical cell comprises the anode 21, the cathode 22, the diaphragm 23, the first separator 24, and the second separator 25.

The first separator 24 and the second separator 25 each have the flow channel 10 comprising the flow-channel walls 1 and flow-channel grooves 2 sandwiched between the flow-channel walls 1.

The third embodiment of the electrochemical cell 300 differs from the second embodiment in that resin is provided on the porous support 21A and/or the porous support 22A. The explanation common between the second embodiment and this embodiment will be omitted.

Preferably, one or more resins 21D are provided in the porous support 21A. The one or more resins 21D are preferably provided along the flow-channel wall 1 of the first separator 24.

Preferably, one or more resins 22D are provided in the porous support 22A. The one or more resins 22D are preferably provided along the flow-channel wall 1 of the second separator 25.

The resins 21D and 22D are preferably one or more selected from the group consisting of epoxy resins, phenolic resins, and polyurethane resins.

The resins 21D are preferably in direct contact with the flow-channel wall 1 sandwiched between the flow-channel grooves 2 of the first separator 24. The area between the flow-channel wall 1 where the resins 21D are in direct contact, the flow of fluid is blocked by the resin 21D. As a result, the fluid diffuses along the flow-channel grooves 2, so that fluid is supplied and discharged with less bias across the entire porous support 21A of the anode 21. Preferably, the resins 21D are provided along the flow-channel wall 1 sandwiched between the flow-channel grooves 2 in the porous support 21A.

The resins 22D are preferably in direct contact with the flow-channel walls 1 sandwiched between the flow-channel grooves 2 of the second separator 25. The area between the flow-channel walls 1 where the resins 22D are in direct contact, the flow of fluid is blocked by the resin 22D. As a result, the fluid diffuses along the flow-channel grooves 2, so that fluid is supplied and discharged with less bias across the entire porous support 22A of the cathode 22. Preferably the resin 22D provided along the flow-channel wall 1 sandwiched between the flow-channel grooves 2 in the porous support 22A.

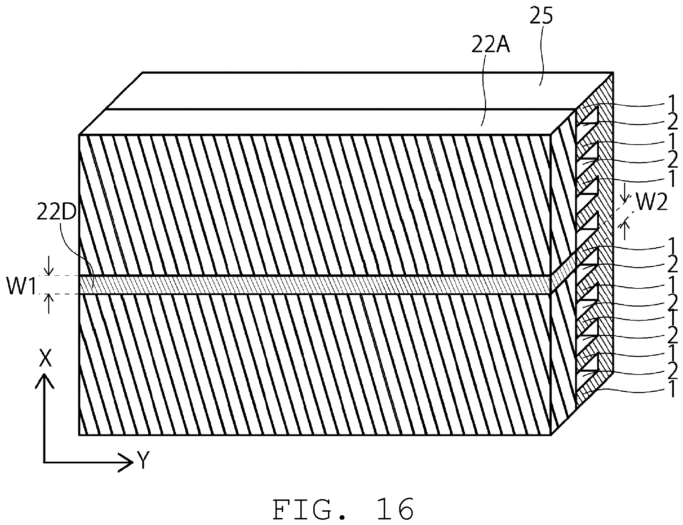

FIG. 16 shows a perspective schematic diagram of the B-B' cross section of FIG. 15. FIG. 16 shows the cathode 22 side, but the anode 21 side is similar to FIG. 16. The resin 22D (21D) is preferably provided on the surface side of the porous support 22A (21A) along the flow-channel wall 1. For example, the resin 21D (resin 22D) is preferably provided along the flow-channel wall 1 according to a pattern such as the separators 100 to 108 shown in FIGs. 1 to 3 and FIGs. 5 to 10, and the resin 21D (22D) is preferably provided at the same position as the protrusions 1A shown in FIGs. 1, 3 and FIGs. 5 to 10.

When the width W1 of the resin 22D (21D) is very (sufficiently) large compared to the width W2 of the flow-channel wall 1, the flow-channel groove 2 may be blocked by the resin 22D (21D). Therefore, the width W1 of the resin 22D (21D) is preferably 10% or more and 250% or less of the width W2 of the flow-channel wall 1 (where the resins 22D (21D) is provided), more preferably 30% or more and 150% or less, even more preferably 50% or more and 90% or less.

The thickness H5 of the resin 21D and 22D is a distance between the surface of the porous support 21A and 22A on the opposite side to the flow-channel wall 1 to the surface of the flow-channel wall 1 towards the thickness direction H4 of the porous support 21A and 22 where the resin 21D and 22D are provided.

The thickness H5 of the resins 21D and 22D is preferably 10 [µm] or more and 500 [µm] or less, more preferably 20 [µm] or more and 250 [µm] or less, and even more preferably 30 [µm] or more and 120 µm or less.

The thickness H5 of the resin 21D and the resins 22D are preferably 0.05 times or more and 0.5 times or less of the thickness H4 of the porous support 21A on which the resins 21D are provided, more preferably 0.1 times or more and 0.4 times or less, and even more preferably 0.15 times or more and 0.35 times or less.

The thickness H5 of the resin 21D and the resins 22D are preferably 0.05 times or more and 0.5 times or less of the thickness H4 of the porous support 22A on which the resins 22D are provided, more preferably 0.1 times or more and 0.4 times or less, and even more preferably 0.15 times or more and 0.35 times or less.

From the viewpoint of partially blocking the fluid flow in the porous support, the one or more resins 21D or the one or more resins 22D are provided along that flow-channel wall 1 on the straight area (excluding the turnaround area), the total length of the resins 21D on each straight area where the resins 21D are present is preferably 50% or more, more preferably 70% or more, and even more preferably 90% or more of the length L1 of that straight area (excluding the turnaround area) of the flow channel 10, and the total length of the resins 22D on each straight area where the resins 22D are present is preferably 50% or more, more preferably 70% or more, and even more preferably 90% or more of the length L1 of that straight area (excluding the turnaround area) of the flow channel 10. The straight area of the flow-channel grooves 2 may include curved sections that are not turnaround areas.

From the viewpoint of partially blocking the fluid flow in the porous support, two or more of the flow-channel walls 1 in which the one or more resins 21D or the resin 22D are provided along that flow-channel wall 1 on the straight area (excluding the turnaround area), are preferably included in the electrochemical cell 300. The total length of the resin 21D on each straight area where the resin 21D are present is preferably 50% or more, more preferably 70% or more, and even more preferably 90% or more of the length L1 of that straight area (excluding the turnaround area) of the flow channel 10, and the total length of the resin 22D on each straight area where the resin 22D are present is preferably 50% or more, more preferably 70% or more, and even more preferably 90% or more of the length L1 of that straight area (excluding the turnaround area) of the flow channel 10. The straight area of the flow-channel grooves 2 may include curved sections that are not turnaround areas.

From the viewpoint of partially blocking the fluid flow rather than completely blocking it, the area in which the resins 21D are provided is preferably 50% or more and 100% or less, more preferably 70% or more and 100% or less, and even more preferably 90% or more and 100% or less of the surface area (excluding the sides) of the flow-channel wall 1 sandwiched between the flow-channel grooves 2, and the area in which the resins 22D are provided is preferably 50% or more and 100% or less, more preferably 70% or more and 100% or less, and even more preferably 90% or more and 100% or less of the surface area (excluding the sides) of the flow-channel wall 1 sandwiched between the flow-channel grooves 2.

The longitudinal elastic modulus (elastic modulus in the height direction) of the porous support 21A on which the resins 21D are provided and the porous support 22A on which the resins 22D are provided is preferably 2.5 [GPa] or more. The longitudinal elastic modulus can be determined, for example, by the resonance method. For the protrusions 1A, the longitudinal elastic modulus of 2.5 [GPa] or more is preferable, 5 [GPa] or more is even more preferable, and 50 [GPa] or more is further more preferable.

The separators 101 through 108 will be described with reference to FIGS. 4 to 11. The schematic diagrams shown in FIGS. 1 to 11 correspond to both the first embodiment and the third embodiment.

FIG. 4 shows the schematic diagram of the separator 101. The separator 101 shown in FIG. 4 is a variation of the separator 100. The resins 21D and 22D of separator 101 are also provided on the turnaround area of the flow channel 10 in the porous supports 21A and 22A.

FIG. 5 shows the schematic diagram of the separator 102. The separator 102 shown in FIG. 5 is a variation of the separator 100. The separator 102 has two flow channels 10, and the resins 21D and 22D provided between the two flow channels 10 divide the two flow channels 10. When the separator 102 is large, dividing one flow channel 10 into multiple channels can reduce pressure loss between the supply side and discharge side of the flow channel 10. The resins 21D and 22D are provided in the same direction along the flow-channel grooves 2 where fluid flows.

The separator 102 shown in FIG. 5 has two systems of flow channels arranged horizontally in the drawing. Two systems of flow channels have the supply manifolds 4 provided on the upper side of the drawing and the exhaust manifolds 6 provided on the lower side of the drawing so that fluid in the two systems flows in the same direction. When dividing the one flow channel into two systems as shown in the separator 102 in FIG. 5 without the resins, the pressure difference at the boundary part between the two flow channels 10 is large, so fluid tends to flow easily into the other system's flow channel. Providing the resins 21D and 22D at the boundaries of the two flow channels 10 can reduce mixing of fluid between the systems.

FIG. 6 shows the schematic diagram of the separator 103. The separator 103 shown in FIG. 6 is a variation of the separator 100. The separator 103 has two flow channels 10, and the resins 21D and 22D provided between the two flow channels divide the two flow channels 10. When the separator 102 is large, dividing the flow channel 10 into multiple channels can reduce pressure loss between the supply side and discharge side of the flow channel 10. The resins 21D and 22D are provided between the flow-channel grooves 2 where fluid flows in opposite directions.

FIG. 6 shows the schematic diagram of separator 103. The separator 103 shown in FIG. 6 is a variation of the separator 100. Two systems of flow channels are arranged vertically, and the two systems of flow channels are set to flow in opposite directions. The supply manifold 4 is provided on the left side of the upper system in the drawing, and the exhaust manifold 6 is provided on the right side of the upper system in the drawing. The exhaust manifold 6 is provided on the left side of the lower system in the drawing, and the supply manifold 4 is provided on the right side of the lower system in the drawing. When the flow channel is divided into two systems as shown in the separator 103 in FIG. 6, the pressure difference at the boundary part between the two flow channels 10 without the resins is large, so fluid tends to flow easily into the other system's flow channel. Providing resins 21D and 22D at the boundaries of the two flow channels 10 can suppress mixing of fluid between systems, and the porous support 21A, 22A.

FIG. 7 shows the schematic diagram of separator 104. The separator 104 shown in FIG. 7 is a variation of separator 103. The resins 21D and 22D are provided near the supply manifold 4 and exhaust manifold 6, where the pressure difference is large, and the resins 21D and 22D are not provided in the middle area of the flow channel 10, where the pressure difference becomes smaller.

By providing the resins 21D and 22D near the supply manifold 4 and exhaust manifold 6, where the pressure difference is large, mixing of fluid between systems can be suppressed, allowing fluid to be supplied and discharged to/from the porous support 21A and 22A as a whole.

FIG. 8 shows the schematic diagram of the separator 105. The separator 105 shown in FIG. 8 is a variation of the separator 100. While the separator 100 has an even number of turnaround areas, the separator 105 has an odd number of the turnaround areas. The resins 21D and 22D are sandwiched between the flow-channel grooves 2 where fluid flows in the same direction.

The separator 105 shown in FIG. 8 has the resin 21D and the resin 22D provided in the latter half of the flow channel 10 (the latter half of the flow channel 10 is from the midpoint (determined by the number of turnaround areas occurring, the separator 105 shown in FIG. 8 has 5 portions where the flow channel turnarounds at approximately 90° or 180°) to the end of the channel, which is susceptible to uneven fluid flow. The resin 21D and the resin 22D are preferably provided beside the flow-channel grooves 2 at the [(the number of the turnaround area)/2]th turnaround area or later from the supply manifold 4. When the number of the turnaround area is 5, the resins 21D and the resin 22D are provided beside the flow-channel grooves 2 between the 3rd turnaround area to the end of the flow channel on the exhaust manifold 6 side. By providing the resins 21D and the resin 22D in the latter half of the flow channel 10, fluid can be supplied and exhausted throughout the porous support.

FIG. 9 shows the schematic diagram of the separator 106. The separator 106 shown in FIG. 9 is a variation of separator 101. The separator 106 has only one system's flow channel 10. The resins 21D and 22D are also useful even for the separator 106 with a short flow channel 10.

FIG. 10 shows the schematic diagram of the separator 107. The separator 107 shown in FIG. 10 is a variation of the separator 106. The supply connection channel 3 and the supply manifold 4, and the exhaust connection channel 5 and the exhaust manifold 6 are asymmetrically arranged. The separator 107 arranged asymmetrically with the supply connection channel 3 and the supply manifold 4, and the exhaust connection channel 5 and the exhaust manifold 6 can utilize the resin 21D and the resin 22D.

FIG. 11 shows the schematic diagram of the separator 108. The separator 108 shown in FIG. 11 is a variation of the separator 106. The separator 108 has one turnaround area in the flow channel 10. The resins 21D and the resin 22D are also useful even for the separator 108 with a simple flow channel 10 having one turnaround area.

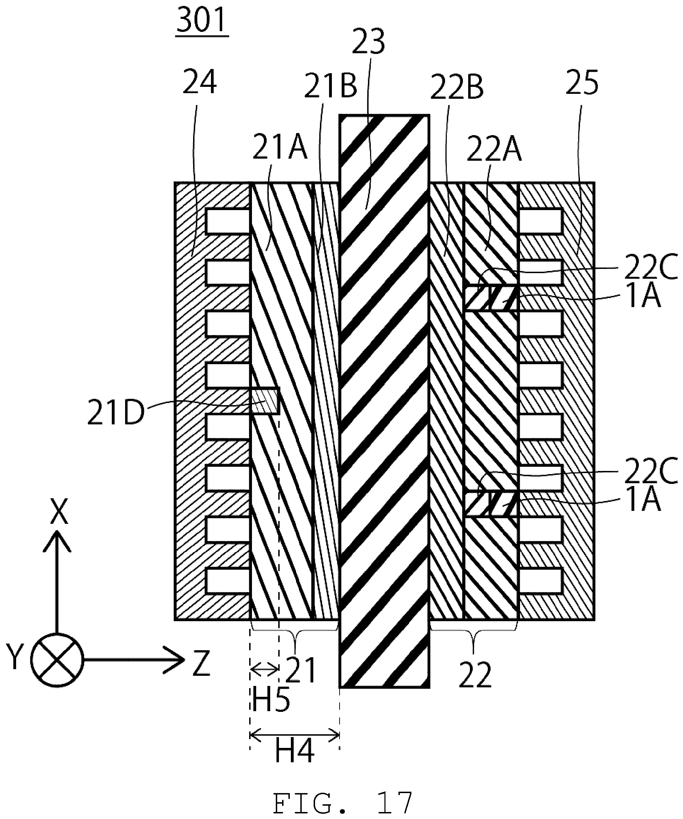

FIG. 17 shows a schematic diagram of the third embodiment electrochemical cell 301. The electrochemical cell 301 is a variation of the electrochemical cell 300. The electrochemical cell 301 uses the porous support 21A of the third embodiment for the anode 21, and uses the porous support 22A without resin 22D for the cathode 22, and uses the separator 25 of the first embodiment for the second separator. Depending on the fluid supplied, compounds generated by electrode reactions, operating pressure, and temperature conditions, embodiments 1 to 3 can be suitably combined.

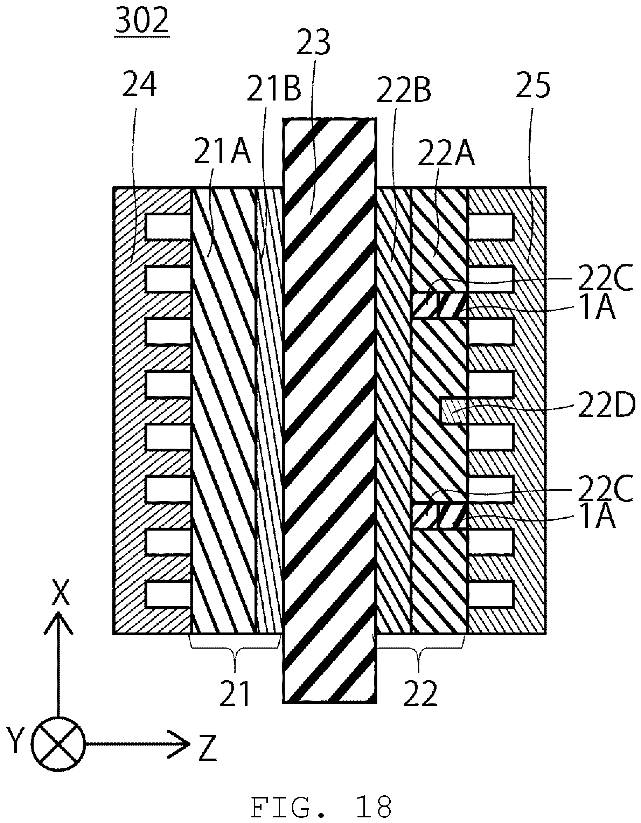

FIG. 18 shows a schematic diagram of the third embodiment electrochemical cell 302. The electrochemical cell 302 is a variation of electrochemical cell 302. The electrochemical cell 302 uses the anode 21 and the first separator 24 of the second embodiment, uses the cathode 22 having the porous support 22A with resin 22D, and uses the separator of the first embodiment for the second separator25. Depending on the fluid supplied, compounds generated by electrode reactions, operating pressure, and temperature conditions, the first embodiment to the third embodiment can be suitably combined.

### (FOURTH EMBODIMENT)

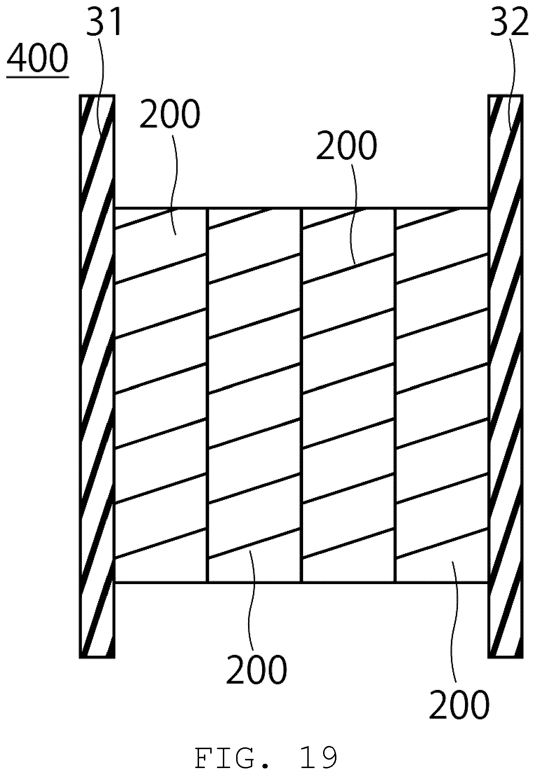

A fourth embodiment relates to a stack. FIG. 19 shows a schematic cross-sectional diagram of a stack 400 according to the fourth embodiment. The stack 400 shown in FIG. 19 comprises the electrochemical cells 200 or the electrochemical cells 300 connected in series. Clamping plates 31 and 32 are attached to both ends of the stack 400. It is possible to utilize variant electrochemical cells within this fourth embodiment.

When performing electrolysis, the amount of carbon compounds such as H₂ and CO generated by a single electrochemical cell 200 or the electrochemical cell 300 is small. When generating electricity, the amount of electricity generated by a single electrochemical cell 200 or electrochemical cell 300 is also small. Therefore, the production output and electricity generation are increased by configuring the stack 400 comprising multiple electrochemical cells 200 or electrochemical cells 300.

### (FIFTH EMBODIMENT)

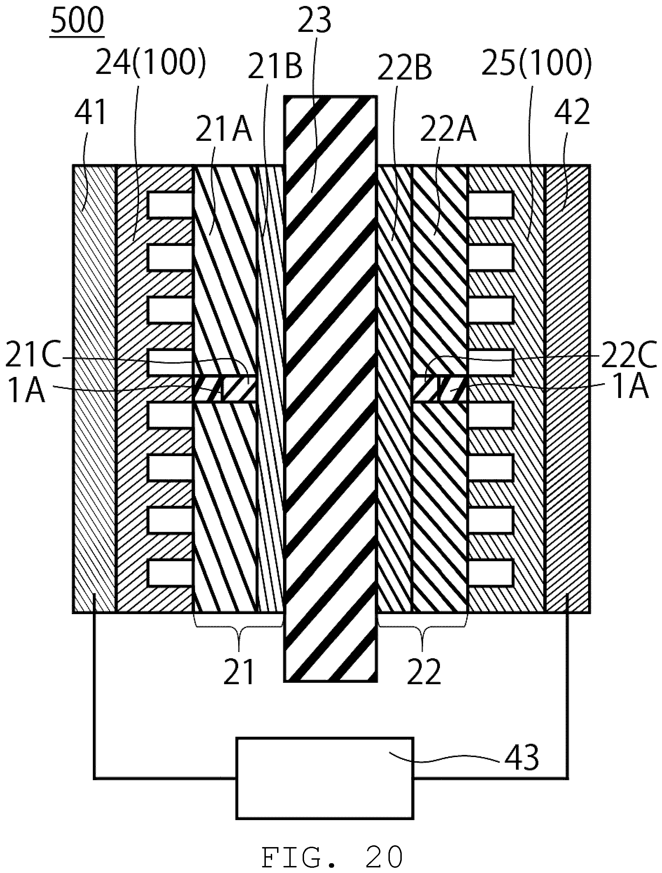

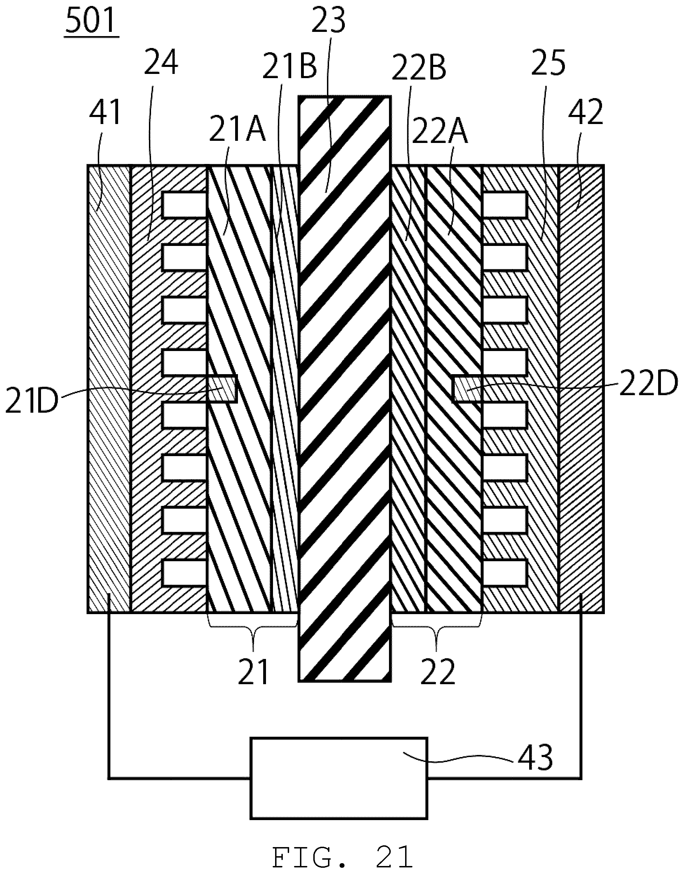

A fifth embodiment relates to an apparatus being an electrolytic device (electrolysis apparatus) and a fuel cell. The electrochemical cell 200, the electrochemical cell 300, the stack 400 comprising electrochemical cells 200, or the stack 400 comprising the electrochemical cells 300 is used in the electrolytic device and the fuel cell. FIG. 20 shows a schematic diagram of an apparatus 500 according to this embodiment. The apparatus 500 utilizes electrochemical cell 200. FIG. 21 shows a schematic diagram of an apparatus 501 according to this embodiment. The apparatus 501 utilizes electrochemical cell 300. The apparatus 500 and 501 illustrate a portion of the actual apparatus configuration. The variant electrochemical cells are also available for use in this fifth embodiment.

The apparatus 500 (501) comprises the electrochemical cell 200, an anode current collector 41, a cathode current collector 42, and a power supply or load 43.

The first separator 24 of the electrochemical cell 200 and the electrochemical cell 300 is attached to the anode current collector 41. The first separator 24 is electrically connected to the anode current collector 41.

The second separator 25 of the electrochemical cell 200 and the electrochemical cell 300 is attached to the cathode current collector 42. The second separator 25 is electrically connected to the cathode current collector 42.

The power supply or load 43 is connected between the anode current collector 41 and the cathode current collector 42.

When the apparatus 500 (501) is an electrolytic device, the power supply 43 is connected between the anode current collector 41 and the cathode current collector 42.

When the apparatus 500 (501) is a fuel cell, the load 43 is connected between the anode current collector 41 and the cathode current collector 42. The load 43 is, for example, a electric converter, a storage battery, or the other.

Hereinafter, the present invention will be described in more detail with reference to examples, but the present invention is not limited to these examples.

### (Example 1)

An electrochemical cell corresponding to FIG. 12 is fabricated using the separator 100 having the protrusions 1A as shown in FIG. 1 for both the first separator 24 and the second separator 25.

### (Example 2)

An electrochemical cell corresponding to FIG. 15 is fabricated using the porous support 21A with the resin 21D positioned at the location shown in FIG. 1 and the porous support 22A with the resin 22D positioned at the location shown in FIG. 1.

### (Comparative Example 1)

An electrochemical cell corresponding to FIG. 12 is fabricated using the separator 100 without the protrusions 1A as shown in FIG. 1 for both the first separator 24 and the second separator 25.

Electrolytic operation is performed under the same conditions, using the electrochemical cells from Examples 1 and 2 and Comparative Example 1 to electrochemically decompose CO₂ and produce CO. Both Examples 1 and 2 allowed for electrolytic operation with lower fluid bias within the porous supports 21A and 22A compared to Comparative Example 1.

Fuel cell operation was performed under the same conditions, using hydrogen as fuel, with the electrochemical cells from Examples 1 and 2 and Comparative Example 1. Both Examples 1 and 2 allowed for operation with lower fluid bias within the porous supports 21A and 22A compared to Comparative Example 1 and exhibited superior IV characteristics.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprising:
a flow channel (10) comprising one or more flow-channel grooves (2) provided between flow-channel walls (1), wherein
one or more protrusions (1A) are provided on the flow-channel walls (1).

2. The separator (100) according to claim 1, wherein
the protrusions (1A) are provided on the flow-channel walls (1) which are sandwiched between the one or more flow-channel grooves (2).

3. The separator (100) according to claim 1 or 2, wherein
the flow channel (10) comprises one or more straight areas and one or more turnaround areas, and
a total length of the protrusions (1A) on each straight area where the protrusions (1A) are present is 50% or more of the length of that straight area.

4. The separator (100) according to any one of claims 1 to 3, wherein
a height of the protrusions (1A) is 10 µm or more and 500 µm or less.

5. The separator (100) according to any one of claims 1 to 4, wherein
two or more of the flow-channel walls (1) in which the protrusions (1A) are provided, are included.

6. The separator (100) according to any one of claims 1 to 5, wherein
the protrusions (1A) are provided in the height direction of the flow-channel wall (1).

7. An electrochemical cell (200) comprising:
an anode (21) comprising a support (21A) and a catalyst layer (21B);
a cathode (22) comprising a support (22A) and a catalyst layer (22B);
an electrolyte membrane (23) between the anode (21) and the cathode (22);
a first separator (24) provided on the anode (21) on a side opposite to the electrolyte membrane (23); and
a second separator (25) provided on the cathode (22) on a side opposite to the electrolyte membrane (23), wherein
the first separator (24) and/or the second separator (25) is the separator (100) according to any one of claims 1 to 6.

8. The electrochemical cell (200) according to claim 7, wherein
a height of the protrusions (1A) of the anode (21) is 0.05 times or more and 0.5 times or less of the thickness of the support (21A) of the anode (21) to which the first separator (24) provided with the protrusions (1A) contact, and
a height of the protrusions (1A) of the cathode (22) is 0.05 times or more and 0.5 times or less of the thickness of the support (22A) of the cathode (22) to which the second separator (25) provided with the protrusions (1A) contact.

9. An electrochemical cell (300) comprising:
an anode (21) comprising a support (21A) and a catalyst layer (21B);
a cathode (22) comprising a support (22A) and a catalyst layer (22B);
an electrolyte membrane (23) between the anode (21) and the cathode (22);
a first separator (24) provided on the anode (21) on a side opposite to the electrolyte membrane (23); and
a second separator (25) provided on the cathode (22) on a side opposite to the electrolyte membrane (23), wherein
one or more resins (21D, 22D)) are provided in the support (21A) of the anode (21) or/and in the support (22A) of the cathode (22),
the first separator (24) and/or the second separator (25) includes a flow channel (10) comprising one or more flow-channel grooves (2) provided between flow-channel walls (1), and
the resins (21D, 22D) are along the flow-channel wall (1).

10. The electrochemical cell (300) according to claim 9, wherein
the reins (21D; 22D) are along the flow-channel wall (1) sandwiched between the flow-channel grooves (2).

11. The electrochemical cell according to claim 9 or 10, wherein
the resins (21D) provided in the support (21A) of the anode (22) are in direct contact with the first separator (24), and
the resins (22D) provided in the support (22A) of the cathode (22) are in direct contact with the second separator (25).

12. The electrochemical cell according to any one of claims 9 to 11, wherein
a thickness of the resins (21D) of the anode (21) is 0.05 times or more and 0.5 times or less of a thickness of the support (21A) of the anode (21) on which the resin (21D) is provided, and
a thickness of the resins (22D) of the cathode (22) is 0.05 times or more and 0.5 times or less of a thickness of the support (22A) of the cathode (22) on which the resin (22D) is provided.

13. The electrochemical cell according to any one of claim 9 to 12, whrein
the flow channel (10) comprises one or more straight areas and one or more turnaround areas, and
a total length of the resins (21D) of the anode (21) on each straight area where the resins (21D) of the anode (21) are present is 50% or more of a length of that straight area, and
a total length of the resins (22D) of the cathode (22) on each straight area where the resins (22D) of the cathode (22) are present is 50% or more of a length of that straight area.

14. The electrochemical cell according to any one of claims 9-13, wherein
an area in which the resins (21D) of the anode (21) are provided is 50% or more and 100% or less of a surface area of the flow-channel wall (1) sandwiched between the flow-channel grooves (2), and/or
an area in which the resins (22D) of the cathode (22) are provided is 50% or more and 100% or less of a surface area of the flow-channel wall (1) sandwiched between the flow-channel grooves (2).

15. The electrochemical cell according to any one of claims 9 to 14, wherein
a width of the resin (21D) of the anode (21) is 10% or more and 250% or less of a width of the flow-channel wall (1), and
a width of the resin (22D) of the cathode (22) is 10% or more and 250% or less of a width of the flow-channel wall (1).
